# EUROPEAN PATENT SPECIFICATION

(11) **EP 3 364 333 B1**
(45) Date of publication and mention of the grant of the patent: **06.04.2022**
(21) Application number: 17156632.6
(22) Date of filing: 17.02.2017
(51) Int. Cl.: G06F 21/86, G06K 19/077, G09F 3/03

(54) **ELECTRONIC TAMPER DETECTION DEVICE**
ELEKTRONISCHE MANIPULATIONSERKENNUNGSVORRICHTUNG
DISPOSITIF DE DÉTECTION DE FRAUDE ÉLECTRONIQUE

(43) Date of publication of application: 22.08.2018
(73) Proprietor: NXP B.V., 5656 AG Eindhoven (NL)
(72) Inventor: SCHWAR, Christian, 5656AG Eindhoven (NL); SCHOMACKER, Ronny, 5656AG Eindhoven (NL)
(74) Representative: Krott, Michel

(56) References cited:
- EP-A1- 0 825 554
- US-A1- 2005 231 365
- US-A1- 2008 061 153
- US-A1- 2016 110 725

## Description

### FIELD

The present disclosure relates to an electronic tamper detection device. Furthermore, the present disclosure relates to a corresponding tamper detection method, and to a corresponding computer program.

### BACKGROUND

Electronic tamper detection devices may be used to detect tampering with closed or sealed products, such as bottles, packets and other containers. For example, in the spirits industry and the pharmaceutical industry such tamper detection devices may be useful. Tamper detection devices often contain a so-called tamper loop. A tamper loop may for example comprise a conductive wire that is broken when a closure or seal in which it is concealed is broken. Frequently used tamper detection devices are radio frequency identification (RFID) or near field communication (NFC) tags comprising or extended with a tamper loop. It may be desirable to improve these tamper detection devices. An exemplary tamper detection device of the prior art is disclosed by EP 0 825 554 A1.

### SUMMARY

The invention is defined by independent claims 1, 9, 10 and 11. Further embodiments are defined in the dependent claims,

In one or more embodiments, the processing unit is configured to store said data with added redundancy.

In one or more embodiments, the storage unit is configured to allow said data to be stored only once.

In one or more embodiments, the processing unit is configured to store said data during a start-up process of the tamper detection device.

In one or more embodiments, the processing unit is configured to store said data during a tamper loop status reporting process of the tamper detection device.

In one or more embodiments, the tamper loop comprises a conductive wire.

In one or more embodiments, the tamper detection device is a near field communication tag or a radio frequency identification tag.

In one or more embodiments, a closure comprises a tamper detection device of the kind set forth.

In one or more embodiments, a seal comprises a tamper detection device of the kind set forth.

### BRIEF DESCRIPTION OF THE DRAWINGS

Embodiments will be described in more detail with reference to the appended drawings, in which:
Fig. 1 shows an example of an electronic tamper detection device;
Fig. 2 shows an illustrative embodiment of a tamper detection device;
Fig. 3 shows an illustrative embodiment of a tamper detection method;
Fig. 4 shows another illustrative embodiment of a tamper detection method;
Fig. 5 shows a further illustrative embodiment of a tamper detection method;
Fig. 6 shows an illustrative embodiment of a communication between near field communication (NFC) devices.

### DESCRIPTION OF EMBODIMENTS

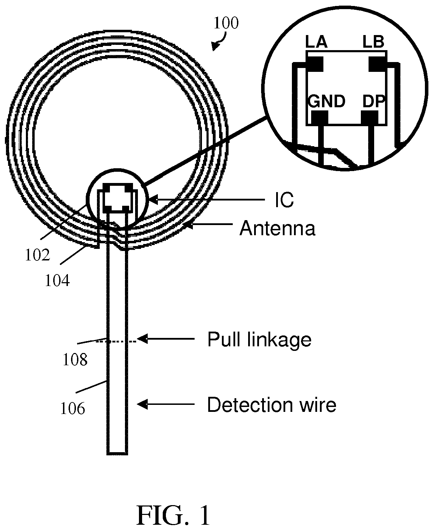

**Fig. 1** shows an example of an electronic tamper detection device 100. In this example, the tamper detection device 100 is an RFID or NFC tag equipped with a tamper loop. The tag may be a so-called passive tag, i.e. a tag powered by an electromagnetic field generated by an external device (not shown). The tag comprises an integrated circuit 102 (i.e., a tag circuit) which is coupled through contact pads LA and LB to an antenna 104 for establishing wireless communication with said external device. The tamper loop is formed by a detection wire 106 (i.e., a conductive wire) which is coupled to the integrated circuit 102 through contact pads GND and DP. The detection wire 106 may for example be concealed in a closure comprising a pull linkage 108. In operation, once the detection wire 106 (tamper loop) has been opened (e.g., broken at the pull linkage 108) and the tag is powered by said electromagnetic field, the tag can detect the "Open" information and act accordingly. As used herein, "Open" information refers to information indicative of an opened (i.e., broken) tamper loop, while "Close" information refers to information indicative of a closed (i.e., unbroken) tamper loop.

As mentioned above, it may be desirable to improve these tamper detection devices. For example, a tag of the kind set forth contains a processing unit that performs a measurement on the tamper loop, and fetches the result of the measurement in a register. Such a register is often implemented using flip-flops. The detection of a tamper attempt, i.e. the detection of an open tamper loop, may not be available for retrieval for a sufficient amount time. Furthermore, the content of the register may be of a transient nature. Therefore, in accordance with the present disclosure, the processing unit of a tamper detection device is configured to detect that the tamper loop is open and to store, if the tamper loop is open, data indicating that the tamper loop has been opened in a non-volatile memory of the tamper detection device. In this way, the information on a detected tamper attempt is stored in a more persistent and reliable manner. A non-volatile memory is particularly suitable for storing the data which indicate that the tamper loop has been opened in a persistent and reliable manner. Examples of non-volatile memories are programmable read-only memories and flash memories. Furthermore, more detailed tamper detection reports can be created, as will explained in more detail below. Also, it is more difficult for an attacker to set the tamper detection device to a seemingly untampered state, i.e. a state in which the tamper loop appears to have never been opened, because both the direct result of the tamper measurement (e.g., the content of the register) and the data in the storage unit should be manipulated.

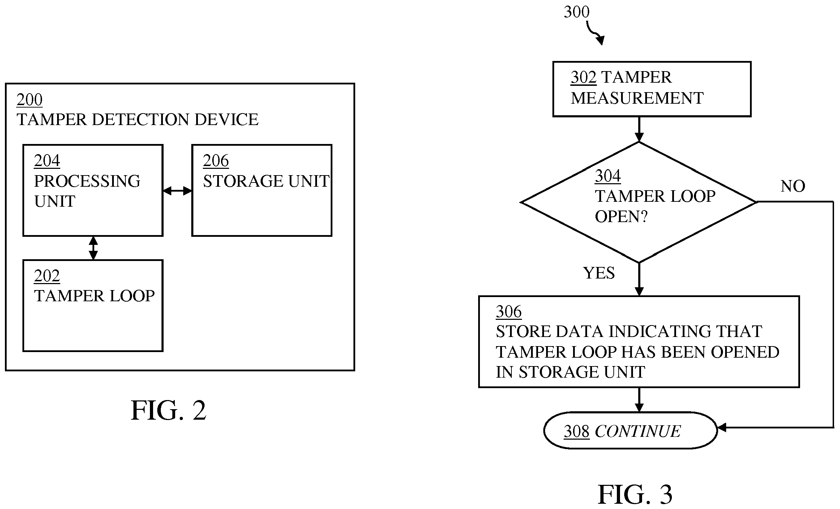

**Fig. 2** shows an illustrative embodiment of a tamper detection device 200. The tamper detection device 200 comprises a tamper loop 202, a processing unit 204, and a storage unit 206. The storage unit 206 is a non-volatile memory. The processing unit 204 is operatively coupled to the tamper loop 202. In a practical and efficient implementation, the tamper loop 202 comprises a conductive wire (not shown). The processing unit 204 is configured to detect that the tamper loop 202 is open. The processing unit 204 may for example be configured to perform electrical measurements on the tamper loop 202, the result of which may be indicative of an open (or closed) tamper loop 202. Furthermore, the processing unit 204 is operatively coupled to the storage unit 206. Furthermore, the processing unit 204 is configured to store, if the tamper loop 202 is open, data indicating that the tamper loop 202 has been opened in the storage unit 206. It is noted that the data indicating that the tamper loop 202 has been opened is referred to as "Recall Open" information herein.

**Fig. 3** shows an illustrative embodiment of a tamper detection method 300. The tamper detection method 300 comprises, at 302, a tamper measurement performed by the processing unit 204 shown in Fig. 1. As mentioned above, the processing unit 204 may for example be configured to perform electrical measurements on the tamper loop 202, the result of which may be indicative of an open (or closed) tamper loop 202. At 304, a decision is taken. If the tamper loop is open, then the method proceeds to step 306. If the tamper loop is not open, then the method proceeds to step 308, in which the process continues with other operations (e.g., transmitting a response to a tamper detection status inquiry). At 306, the processing unit 204 stores data indicating that the tamper loop 202 has been opened in the storage unit 206. The method 300 may be carried out or controlled by a computer program.

It is desirable to store said data in a fail-safe manner. This may be achieved in different ways. The processing unit 204 is configured to store said data with added redundancy. Adding redundancy refers to the process of storing the same data multiple times. For example, the data may be stored two times in independent memory locations. In case the data is lost at one of the locations (e.g. after a couple of years), the data is still available, and the memory location where the data is lost may be refreshed using the data at the other location. In this way, loss of "Recall Open" information over the lifetime of the tamper detection device 200 may be avoided. Furthermore, in some embodiments, the storage unit 206 is configured to allow said data to be stored only once. In this way, a subsequent write attempt to the data's location will fail, so that the data cannot be overwritten. Thus, the probability that the data is lost is reduced. Furthermore, this makes it difficult for an attacker to reset the tamper detection device 200 to a seemingly untampered state.

Furthermore, the tamper detection device further comprises a communication unit (not shown), and the processing unit is configured to retrieve the stored data from the storage unit and to provide the retrieved data to the communication unit. Furthermore, the communication unit is configured to transmit the received data to an external device. For the example, the communication unit may be an near field communication (NFC) unit or a radio frequency identification (RFID) unit. In this way, the stored data may be retrieved easily by an NFC reader or RFID reader. In some embodiments, the tamper detection device is an NFC tag or an RFID tag. NFC tags and RFID tags are relatively simple devices that can easily be embedded into tamper-sensitive products. In some embodiments, a closure comprises the tamper detection device. In other embodiments, a seal comprises the tamper detection device. In this way, detecting the tampering with closed or sealed products, such as bottles, packets and other containers, is facilitated.

In a practical and efficient implementation, an NFC or RFID tag contains an integrated circuit (i.e., a chip) that is able to detect a tamper event. More specifically, the chip contains a processing unit that is configured to test whether a tamper loop (e.g., a conductive wire) has been broken or not. When the processing unit detects that the tamper loop is open (i.e., when it detects the "Open" information), it stores data indicating that the tamper loop has been opened (i.e., the "Recall Open" information) in a non-volatile memory for later use. This storage may be done in a fail-safe manner, for example by adding redundancy and/or as a onetime-programmable memory access. Using a communication unit, the chip can report both kinds of information (i.e., the "Open" or "Close" information, as well as the "Recall Open" information). For instance, the chip may report the information in a response to a dedicated command, or as part of a standardized message such as an NFC data exchange format (NDEF) message. Table 1 shows that the two kinds of tamper information enable different interpretations of the tamper status, which in turn enables creating more detailed tamper detection reports.

**Table 1**

| **Tamper loop "Open"** | **"Recall Open" in memory** | **Interpretation** |
|---|---|---|
| no | no | no tamper event detected |
| yes | no | tamper wire has been broken the first time |
| yes | yes | tamper wire has been broken more than one time |
| no | yes | tamper wire has been broken and re-connected |

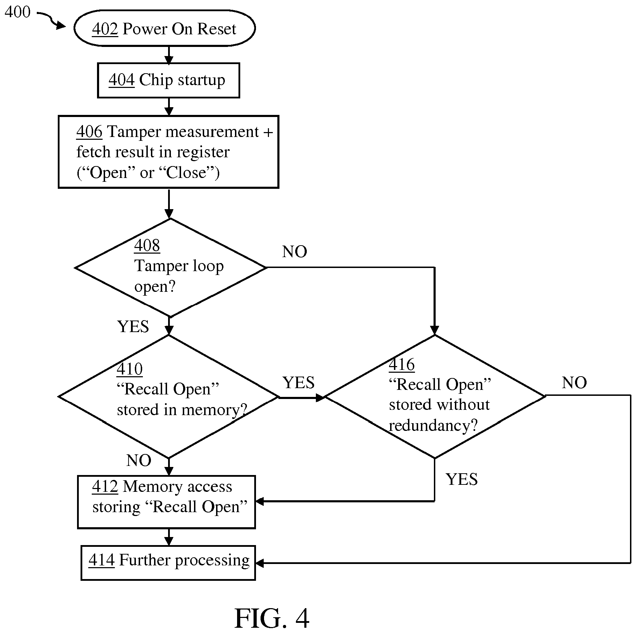

**Fig. 4** shows another illustrative embodiment of a tamper detection method 400. In one or more embodiments, the processing unit is configured to store the data during a start-up process of the tamper detection device. Such a start-up process is shown in Fig. 4. In particular, the tamper detection method 400 comprises, at 402, initiating a Power On Reset of the chip of the tamper detection device. Then, at 404, the chip starts up. At 406, the processing unit performs a tamper measurement and fetches the result of the measurement ("Open" or "Close") in a register. The register may have been implemented using flip-flops. At 408, a decision is taken: if the tamper loop is open, the method 400 proceeds to step 410; otherwise, the method 400 proceeds to step 414. At 410, another decision is taken: if the "Recall Open" information (i.e., the data indicating that the tamper loop has been opened) is already present in the memory, the method 400 proceeds to step 416; otherwise, the method 400 proceeds to step 412. At 416, another decision is taken: if the "Recall Open" information has already been stored in the memory, but without added redundancy, the method 400 proceeds to step 412; otherwise, the method 400 proceeds to step 414. Step 416 enables, among others, a refresh of the "Recall Open" information in the memory in cases where the tamper loop has been reconnected and the previously stored redundant "Recall Open" information is lost. At 412, the "Recall Open" information is stored in the memory. At 414, the chip may continue with other operations.

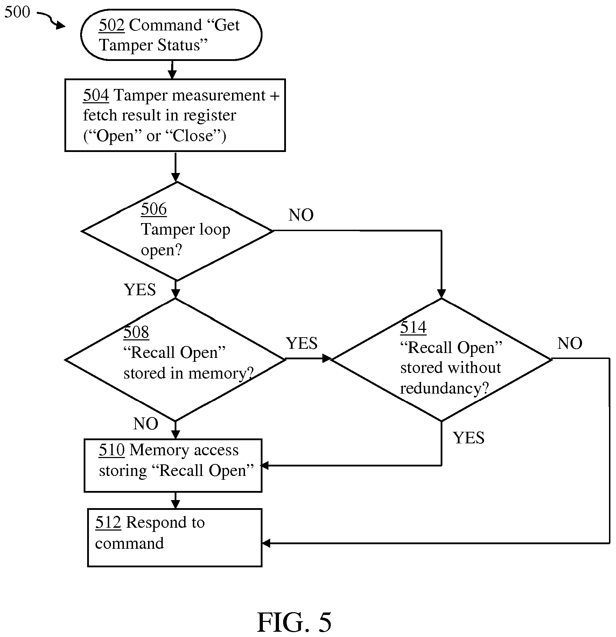

**Fig. 5** shows a further illustrative embodiment of a tamper detection method 500. In one or more embodiments, the processing unit is configured to store the data during a tamper loop status reporting process of the tamper detection device. Such a tamper loop status reporting process is shown in Fig. 5. In particular, the tamper detection method 500 comprises, at 502, receiving, by the processing unit via the communication unit, a "Get Tamper Status" command from an external device. Then, at 504, the processing unit performs a tamper measurement and fetches the result of the measurement ("Open" or "Close") in a register. The register may have been implemented using flip-flops. At 506, a decision is taken: if the tamper loop is open, the method 500 proceeds to step 508; otherwise, the method 500 proceeds to step 512. At 508, another decision is taken: if the "Recall Open" information (i.e., the data indicating that the tamper loop has been opened) is already present in the memory, the method 500 proceeds to step 514; otherwise, the method 500 proceeds to step 510. At 514, another decision is taken: if the "Recall Open" information has already been stored in the memory, but without added redundancy, the method 500 proceeds to step 510; otherwise, the method 500 proceeds to step 512. At 510, the "Recall Open" information is stored in the memory. At 512, the processing unit responds to the command via the communication unit.

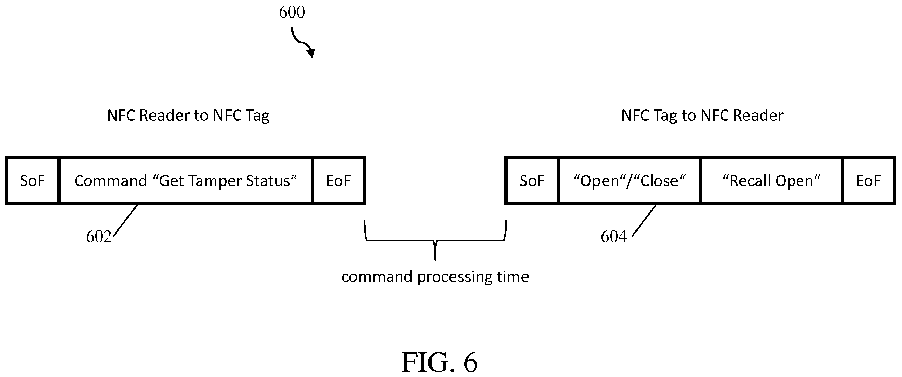

**Fig. 6** shows an illustrative embodiment of a communication 600 between near field communication (NFC) devices. The communication 600 comprises a "Get Tamper Status" command message 602 which is transmitted by an NFC reader to an NFC tag. The message 602 comprises a frame having a first portion (Start of Frame, SoF), a second portion (a "Get Tamper Status" command), and a third portion (End of Frame, EoF). Furthermore, the communication 600 comprises a response message 604 which is transmitted by the NFC tag to the NFC reader. The message 604 comprises a frame having a first portion (Start of Frame, SoF), a second portion (the "Open" or "Close" information), a third portion (the "Recall Open" information), and a fourth portion (End of Frame, EoF). It is noted that the transmission of message 602 may precede step 502 of the tamper detection method 500 shown in Fig. 5. Furthermore, the message 604 may transmitted during step 512 of the tamper detection method 500 shown in Fig. 5.

The systems and methods described herein may at least partly be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "mobile device" refers to any type of portable electronic device, including a cellular telephone, a Personal Digital Assistant (PDA), smartphone, tablet etc. Furthermore, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and businessrelated constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: tamper detection device
- 102: integrated circuit
- 104: antenna
- 106: detection wire
- 108: pull linkage
- 200: tamper detection device
- 202: tamper loop
- 204: processing unit
- 206: storage unit
- 300: tamper detection method
- 302: tamper measurement
- 304: tamper loop open?
- 306: store data indicating that tamper loop has been opened in storage unit
- 308: continue
- 400: tamper detection method
- 402: Power On Reset
- 404: chip startup
- 406: tamper measurement and fetch result in register ("Open" or "Close")
- 408: tamper loop open?
- 410: "Recall Open" stored in memory?
- 412: memory access storing "Recall Open"
- 414: further processing
- 416: "Recall Open" stored without redundancy?
- 500: tamper detection method
- 502: command "Get Tamper Status"
- 504: tamper measurement and fetch result in register ("Open" or "Close")
- 506: tamper loop open?
- 508: "Recall Open" stored in memory?
- 510: memory access storing "Recall Open"
- 512: respond to command
- 514: "Recall Open" stored without redundancy?
- 600: communication between NFC devices
- 602: command
- 604: response to command

## Claims

1. An electronic tamper detection device (200) comprising a tamper loop (202), a processing unit (204), a storage unit (206) and a communication unit, wherein the processing unit (204) is configured to perform a measurement on the tamper loop (202), wherein the processing unit (204) is further configured to fetch a result of said measurement in a register and to store, if the tamper loop (202) is open, data indicating that the tamper loop (202) has been opened in said storage unit (206), wherein the storage unit (206) is a non-volatile memory;
wherein the processing unit (204) is further configured to retrieve the stored data from the storage unit (206) and to provide the retrieved data and the result of the measurement to the communication unit, wherein the communication unit is configured to transmit said retrieved data and the result of the measurement to an external device in a response to a command from said external device or in a message to said external device;
**characterized in that** the processing unit (204) is configured to store said data indicating that the tamper loop (202) has been opened in multiple independent locations of said storage unit (206).

2. The tamper detection device (200) of claim 1, wherein the storage unit (206) is configured to allow said data to be stored only once.

3. The tamper detection device (200) of any preceding claim, wherein the processing unit (204) is configured to store said data if the tamper loop (202) is open after a chip of the tamper detection device (200) has started up.

4. The tamper detection device (200) of any preceding claim, wherein the processing unit (204) is configured to store said data during a tamper loop status reporting process of the tamper detection device (200).

5. The tamper detection device (200) of any preceding claim, wherein the tamper loop (202) comprises a conductive wire.

6. The tamper detection device (200) of any preceding claim, being a near field communication tag or a radio frequency identification tag.

7. A closure comprising the tamper detection device (200) of any preceding claim.

8. A seal comprising the tamper detection device (200) of any preceding claim.

9. A tamper detection method (300) using an electronic tamper detection device (200), the tamper detection device (200) comprising a tamper loop (202), a processing unit (204), a storage unit (206) and a communication unit, wherein the storage unit (206) is a non-volatile memory, and wherein the processing unit (204) performs a measurement (302) on the tamper loop (202), wherein the processing unit (204) fetches a result of said measurement in a register and stores (306), if the tamper loop (202) is open (304), data indicating that the tamper loop (202) has been opened in said storage unit (206);
wherein the processing unit (204) retrieves the stored data from the storage unit (206) and provides the retrieved data and the result of the measurement to the communication unit, wherein the communication unit transmits said retrieved data and the result of the measurement to an external device in a response to a command from said external device or in a message to said external device;
**characterized in that** the processing unit (204) stores said data indicating that the tamper loop (202) has been opened in multiple independent locations of said storage unit (206).

10. A computer program comprising non-transitory, executable instructions which, when executed by a processing unit of an electronic tamper detection device according to claim 1, carry out or control the method (300) of claim 9.

11. A computer-readable medium comprising the computer program of claim 10.

## Patentansprüche

1. Elektronische Manipulationsdetektionseinrichtung (200) umfassend eine Manipulationsschleife (202), eine Verarbeitungseinheit (204), eine Ablageeinheit (206) und eine Kommunikationseinheit, wobei die Verarbeitungseinheit (204) ausgelegt ist zum Durchführen einer Messung an der Manipulationsschleife (202), wobei die Verarbeitungseinheit (204) weiter ausgelegt ist zum Holen eines Ergebnisses der Messung in einem Register und zum Ablegen, falls die Manipulationsschleife (202) offen ist, von Daten, die angeben, dass die Manipulationsschleife (202) geöffnet worden ist, in der Ablageeinheit (206), wobei die Ablageeinheit (206) ein nichtflüchtiger Speicher ist;
wobei die Verarbeitungseinheit (204) weiter ausgelegt ist zum Abrufen der abgelegten Daten aus der Ablageeinheit (206) und zum Liefern der abgerufenen Daten und des Ergebnisses der Messung an die Kommunikationseinheit, wobei die Kommunikationseinheit ausgelegt ist zum Übertragen der abgerufenen Daten und des Ergebnisses der Messung an eine externe Einrichtung als eine Antwort auf einen Befehl von der externen Einrichtung oder in eine Nachricht an die externe Einrichtung;
**dadurch gekennzeichnet, dass** die Verarbeitungseinheit (204) ausgelegt ist zum Ablegen der Daten, die angeben, dass die Manipulationsschleife (202) geöffnet worden ist, an mehreren unabhängigen Orten der Ablageeinheit (206).

2. Manipulationsdetektionseinrichtung (200) nach Anspruch 1, wobei die Ablageeinheit (206) ausgelegt ist zu gestatten, dass die Daten nur einmal abgelegt werden.

3. Manipulationsdetektionseinrichtung (200) nach einem vorhergehenden Anspruch, wobei die Verarbeitungseinheit (204) ausgelegt ist zum Ablegen der Daten, falls die Manipulationsschleife (202) offen ist, nachdem ein Chip der Manipulationsdetektionseinrichtung (200) hochgefahren ist.

4. Manipulationsdetektionseinrichtung (200) nach einem vorhergehenden Anspruch, wobei die Verarbeitungseinheit (204) ausgelegt ist zum Ablegen der Daten während eines Manipulationsschleifenstatusmeldungsprozesses der Manipulationsdetektionseinrichtung (200).

5. Manipulationsdetektionseinrichtung (200) nach einem vorhergehenden Anspruch, wobei die Manipulationsschleife (202) einen leitfähigen Draht umfasst.

6. Manipulationsdetektionseinrichtung (200) nach einem vorhergehenden Anspruch, die ein Nahfeldkommunikations-Tag oder ein Hochfrequenzidentifikations-Tag ist.

7. Verschluss umfassend die Manipulationsdetektionseinrichtung (200) nach einem vorhergehenden Anspruch.

8. Siegel, umfassend die Manipulationsdetektionseinrichtung (200) nach einem vorhergehenden Anspruch.

9. Manipulationsdetektionsverfahren (300) unter Verwendung einer elektronischen Manipulationsdetektionseinrichtung (200), wobei die Manipulationsdetektionseinrichtung (200) eine Manipulationsschleife (202), eine Verarbeitungseinheit (204), eine Ablageeinheit (206) und eine Kommunikationseinheit umfasst, wobei die Ablageeinheit (206) ein nichtflüchtiger Speicher ist, und wobei die Verarbeitungseinheit (204) eine Messung (302) an der Manipulationsschleife (202) durchführt, wobei die Verarbeitungseinheit (204) ein Ergebnis der Messung in einem Register holt und, falls die Manipulationsschleife (202) offen ist (304), Daten, die angeben, dass die Manipulationsschleife (202) geöffnet worden ist, in der Ablageeinheit (206) ablegt (306);
wobei die Verarbeitungseinheit (204) die abgelegten Daten aus der Ablageeinheit (206) abruft und die abgerufenen Daten und das Ergebnis der Messung an die Kommunikationseinheit liefert, wobei die Kommunikationseinheit die abgerufenen Daten und das Ergebnis der Messung an eine externe Einrichtung als eine Antwort auf einen Befehl von der externen Einrichtung oder in eine Nachricht an die externe Einrichtung überträgt;
**dadurch gekennzeichnet, dass** die Verarbeitungseinheit (204) die Daten, die angeben, dass die Manipulationsschleife (202) geöffnet worden ist, an mehreren unabhängigen Orten der Ablageeinheit (206) ablegt.

10. Computerprogramm, umfassend nichtvorübergehende, ausführbare Anweisungen, die bei Ausführung durch eine Verarbeitungseinheit einer elektronischen Manipulationsdetektionseinrichtung nach Anspruch 1, eine Steuerung des Verfahrens (300) von Anspruch 9 ausführen.

11. Computerlesbares Medium, umfassend das Computerprogramm von Anspruch 10.

## Revendications

1. Dispositif électronique de détection de violation (200) comprenant une boucle anti-violation (202), une unité de traitement (204), une unité de stockage (206) et une unité de communication, l'unité de traitement (204) étant configurée de façon à exécuter une mesure sur la boucle anti-violation (202), l'unité de traitement (204) étant configurée en outre de façon à aller chercher un résultat de ladite mesure dans un registre et à stocker, si la boucle anti-violation (202) est ouverte, des données indiquant que la boucle anti-violation (202) a été ouverte dans ladite unité de stockage (206), l'unité de stockage (206) étant une mémoire non volatile ;
l'unité de traitement (204) étant configurée en outre de façon à récupérer les données stockées depuis l'unité de stockage (206) et à fournir ces données récupérées et le résultat de la mesure à l'unité de communication, l'unité de communication étant configurée de façon à transmettre lesdites données récupérées et le résultat de la mesure à un dispositif externe dans une réponse à une commande venant dudit dispositif externe ou dans un message envoyé audit dispositif externe ;
**caractérisé en ce que** l'unité de traitement (204) est configurée de façon à stocker lesdites données indiquant que la boucle anti-violation (202) a été ouverte dans des emplacements indépendants multiples de ladite unité de stockage (206).

2. Dispositif de détection de violation (200) selon la revendication 1, dans lequel l'unité de stockage (206) est configurée de façon à permettre auxdites données d'être stockées seulement une fois.

3. Dispositif de détection de violation (200) selon l'une quelconque des revendications précédentes, dans lequel l'unité de traitement (204) est configurée de façon à stocker lesdites données si la boucle anti-violation (202) est ouverte après qu'une puce du dispositif de détection de violation (200) a été lancée.

4. Dispositif de détection de violation (200) selon l'une quelconque des revendications précédentes, dans lequel l'unité de traitement (204) est configurée de façon à stocker lesdites données pendant un processus de signalement d'état de la boucle anti-violation du dispositif de détection de violation (200).

5. Dispositif de détection de violation (200) selon l'une quelconque des revendications précédentes, dans lequel la boucle anti-violation (202) comprend un fil conducteur.

6. Dispositif de détection de violation (200) selon l'une quelconque des revendications précédentes, étant une étiquette de communication en champ proche ou une étiquette d'identification par radiofréquence.

7. Fermeture comportant un dispositif de détection de violation (200) selon l'une quelconque des revendications précédentes.

8. Sceau comportant un dispositif de détection de violation (200) selon l'une quelconque des revendications précédentes.

9. Procédé de détection de violation (300) utilisant un dispositif électronique de détection de violation (200), ce dispositif de détection de violation (200) comprenant une boucle anti-violation (202), une unité de traitement (204), une unité de stockage (206) et une unité de communication, l'unité de stockage (206) étant une mémoire non volatile, et l'unité de traitement (204) exécutant une mesure (302) sur la boucle anti-violation (202), l'unité de traitement (204) allant chercher un résultat de ladite mesure dans un registre et stockant (306), si la boucle anti-violation (202) est ouverte (304), des données indiquant que la boucle anti-violation (202) a été ouverte dans ladite unité de stockage (206) ;
l'unité de traitement (204) récupérant les données stockées depuis l'unité de stockage (206) et fournissant ces données récupérées et le résultat de la mesure à l'unité de communication, l'unité de communication transmettant lesdites données récupérées et le résultat de la mesure à un dispositif externe dans une réponse à une commande venant dudit dispositif externe ou dans un message envoyé audit dispositif externe ;
**caractérisé en ce que** l'unité de traitement (204) stocke lesdites données indiquant que la boucle anti-violation (202) a été ouverte dans des emplacements indépendants multiples de ladite unité de stockage (206).

10. Programme informatique comportant des instructions exécutables non transitoires qui, lorsqu'elles sont exécutées par une unité de traitement d'un dispositif électronique de détection de violation selon la revendication 1, exécute ou commande le procédé (300) selon la revendication 9.

11. Support lisible par ordinateur comprenant le programment informatique selon la revendication 10.
